# EUROPÄISCHE PATENTSCHRIFT

(11) **EP 0 734 299 B1**
(45) Veröffentlichungstag und Bekanntmachung des Hinweises auf die Patenterteilung: **08.03.2000**
(21) Anmeldenummer: 95902118.9
(22) Anmeldetag: 01.12.1994
(51) Int. Cl.: B23B 51/04, B23G 1/32

(54) **FRÄSBOHRWERKZEUG**
MILLING AND BORING TOOL
OUTIL DE FRAISAGE ET D'ALESAGE

(30) Priorität: 14.12.1993 DE 4342557
(43) Veröffentlichungstag der Anmeldung: 02.10.1996
(73) Patentinhaber: Leeb, Felix, D-94405 Landau/Isar (DE)
(72) Erfinder: Leeb, Felix, D-94405 Landau/Isar (DE)
(74) Vertreter: Schön, Theodor, Patent- und Zivilingenieur
(86) Internationale Anmeldenummer: EP9404017
(87) Internationale Veröffentlichungsnummer: WO9516534

(56) Entgegenhaltungen:
- DE-A- 3 733 298
- DE-A- 3 831 046
- DE-A- 3 909 077
- US-A- 4 268 198

## Beschreibung

Die Erfindung bezieht sich auf Fräsbohrwerkzeuge gemäß den Oberbegriffen der Ansprüche 1 und 9 und auf einem Verfahren zur Herstellung von Ausnehmungen gemäß dem Oberbegriff des Anspruchs 10.

Fräsbohrwerkzeuge dieser Bauart und Ausstattung zum Einsatz in Verbindung mit CNC-gesteuerten Maschinen oder dergleichen Maschinen bzw. Vorrichtungen zum Ausführen des Zirkularfräsens sind aus der DE-0S 39 09 077 und der DE-0S 38 31 046, die den nächstliegenden Stand der Technik offenbart, zur Herstellung von Bohrungen, Passungen, Ausnehmungen und die Erstellung von Gewinden ins volle Material bekannt. Dabei werden zur Erzeugung der Kernlochausnehmung jeweils pro Schneideneinheit zwei miteinander eine V-förmige Schneidgeometrie bildende Stirnschneiden in Form eines Radius und äußere und innere Flankenschneiden eingesetzt. Erst durch diese Schneidengeometrie ist die Erstellung vor allem von Passungen ins volle Material infolge einer erheblichen Reduzierung des axialen Widerstandes fast möglich und vor allem wird durch diese Schneidengeometrie die Standzeit der Stirnschneiden des Fräsbohrwerkzeuges wesentlich erhöht, da diese ständig durch den Zirkularfräsvorgang außer Schneideingriff kommen. Beide Systeme sind mit gewissen Nachteilen, sowohl bei der Erstellung einer Passung ins volle Material, als auch bei der Erstellung von Gewinden behaftet. Der wesentliche Nachteil der bei der DE 39 09 077 zum Einsatz kommenden Wendeschneidplatten besteht hauptsächlich darin, daß jeweils zwei Platten nur eine Fräseinheit der eingangs aufgeführten Schneidengeometrie ergeben, wodurch im Hinblick darauf, daß nur eine begrenzte Anzahl von Wendeplatten am Fräserschaft anbringbar ist, die Anzahl der zum Einsatz kommenden Schneiden stark begrenzt ist. Zum anderen ist die Befestigung am Fräserschaft technisch sehr schwierig und natürlich dadurch sehr kostenintensiv. Bei den in der DE 38 31 046 zum Einsatz kommenden Schneideplatten liegt einmal das Problem darin, daß diese Platten, bedingt durch ihren Plattensitz nicht als Wendeplatten ausgebildet sein können, und zum andern ist auch hier der Plattensitz technisch aufwendig und kostenintensiv. Außerdem würden sich die Schneidplatten bei dem nun geplantem Fräsvorgang vom Plattensitz lösen. Ein weiteres Problem besteht darin, daß, um den hier zur Anwendung kommenden Wendeschneidplatten zum einen eine ausreichende Eigenfestigkeit zu geben und zum anderen um vor allem diese am Fräserschaft ausreichend befestigen zu können, die Flankenschneiden eine meist nicht unerhebliche Flankenlänge aufweisen müssen. Dies ist aber für den vorgesehenen Einsatz (vor allem Erstellung von Passungen ins volle Material) mit dem Nachteil behaftet daß die Flankenschneiden ganz exakt, gleich 100%-ig im Winkel zur Fräserachse, am Fräserschaft angebracht sein müssen, denn sonst schneiden die Schneiden in der Umfangsausnehmung der zu erstellenden Passung nach, wodurch diese in ihrem oberen Bereich ein größeres Maß bekommen würde als im Bereich des unteren Bohr- bzw. Fräsgrundes. Auch werden dadurch die für den Einsatz auf Umschlag vorgesehenen Schneiden unnötigerweise vorzeitig teilweise abgenutzt. In der Praxis hat sich herausgestellt daß mit einem solchen Werkzeug v. a. bedingt durch die Länge der seitlichen Flankenschneiden die erforderlichen Passungsmaße nicht herstellbar sind. Ein weiteres Problem liegt darin, daß der Schneidenbereich der Wendeplatten, welcher die Schrupparbeit beim Zerspanungsvorgang ausführt, nicht die ideale Schneidengeometrie vorliegt, was sich zum einen nachteilig auf den Energiebedarf und den Leistungsbedarf der Antriebsmaschine auswirkt, zum anderen aber darunter auch die Standzeit der gesamten zum Einsatz kommenden Schneiden leidet.

. Des Weiteren hat sich in der Serienfertigung in der Praxis herausgestellt, daß, falls die Stirnschneiden leicht verschlissen und gleich unscharf sind, für die Erstellung einer Passung ein zweiter Arbeitsgang, zwar mit gleichem Werkzeug und mit demselben Programmablauf, jedoch unter Berücksichtigung der Maßabweichung nötig wird. Dabei bringt dieser zusätzliche Programmablauf oft auch nicht den angestrebten Erfolg, da der verschlissene Schneidenbereich dem noch guten (scharfen) Schneidenbereich vorgelagert ist und somit das Werkzeug darin hindert, den vorprogrammierten Weg einzuhalten, da die unscharfen Schneiden eine Korrektur der nicht mehr berechenbaren Abweichung der im µm-Bereich zu erstellenden Ausnehmung (Passung) durch Reibung an der bereits erstellten Ausnehmungswand verhindern. Dieses Problem besteht natürlich auch bei Fräsbohrwerkzeugen, die aus Durchmessergründen für diesen geplanten Einsatz aus Vollmaterial gefertigt sind oder auch mit einer durchgehenden Schneidplatte bestückt sind.

Ein weiteres Problem liegt darin, daß bei mit Wendeplatten bestückten Fräsbohrwerkzeugen mit großem Durchmesser, der schneidenfreie Raum in der Mitte zwischen den inneren Flankenschneiden sehr groß ist, wodurch sich auch der erforderliche Mindestvorsatz (gleich Vorsatz außer Mitte) dementsprechend erhöht und wodurch sich die Fertigungszeit beim Einsatz eines solchen Fräsbohrwerkzeuges für die Erstellung von Bohrungen in diesem Maße erhöht, was sich v.a. nachteilig in der Serienfertigung auf die Wirtschaftlichkeit solcher Werkzeuge auswirkt. Bei der Erzeugung eines Gewindes ins volle Material entstehen beim Einsatz von Schneidplatten dieselben Probleme, wenn diese auf Umschlag einsetzbar sein sollen, bzw. wenn große Gewindedurchmesser erzeugt werden sollen. Es liegen weitere Probleme vor, da zum einen dort das Endprodukt das Gewinde sein soll, in dem die gewindeerzeugenden Schneiden gegenüber den kernlocherzeugenden Schneiden bei der Bearbeitung von manchen Materialien zu schnell unscharf werden, wodurch die mögliche Standzeit der Kernlochschneiden nicht voll ausgeschöpft werden kann. Ein weiteres Problem liegt darin, daß der bei diesem Lösungsvorschlag vorgesehenen Schneidengeometrie die Wendeplatten nur schwer am Plattenträger bzw. Werkzeugschaft befestigt werden können.

Der Erfindung liegt die Aufgabe zugrunde, ein Fräsbohrwerkzeug der eingangs bezeichneten Bauart mit entsprechenden Schneidgeometrien zur Herstellung exakt kreisrunder und wahlweise auch mit einem Innengewinde versehener Bohrungsausnehmungen in Vollmaterial anzugeben, wobei zudem die Befestigung und Zentrierung bzw. Ausrichtung der Wendeplatte am Werkzeugschaft bzw. Wendeplattenträger gegenüber bekannten Einrichtungen dieser Art weiter verbessert und vereinfacht werden soll.

Diese Aufgabe wird erfindungsgemäß durch ein Fräsbohrwerkzeug mit den kennzeichnenden Merkmalen des Patentanspruchs 1 oder 9 gelöst. Vorteilhafte Ausgestaltungen sind in den Unteransprüchen angegeben

In erfindungsgemäßer Weise wird vorgeschlagen, ausgehend von der durch eine V-förmige Schneidgeometrie gekennzeichneten Form der Schneidplatten nach der DE 38 31 046, die dort aufgezeigte Schneidengeometrie doppelseitig an einer Schneidenplatte anzubringen, wodurch diese Platte auf Umschlag eingesetzt werden kann (gleich Wendeplatte). Des weiteren wird zugleich auch vorgeschlagen, daß die zum Einsatz kommende, als Wendeplatte geformte Schneidplatte hinsichtlich ihrer seitlichen äußeren und inneren Flankenschneiden mittels jeweils einer Querschneide in zwei gegeneinander geringfügig versetzte Schneidenabschnitte unterteilt ist. Dabei ist die obere Hälfte der äußeren Flankenschneide nach innen versetzt, so daß sie nicht in Schneideingriff kommt. Des weiteren kann auch dieser nun reduzierte Schneidenbereich nochmals unterteilt sein und zwar im vorderen Bereich als Schruppschneide und im anderen Bereich als durch eine weitere Querschneide abgeteilte und leicht nach außen vorstehend angebrachte Schlichtschneide. Dabei können die solcherart aufgeteilten Schneiden, zum einen Teil als Schruppschneide mit einer für den Schruppeinsatz idealen, teilweise bekannten Schneidgeometrie gestaltet sein, und die sich anschließenden Schlichtschneiden eine für diesen Einsatz ausgerichtete Schneidengeometrie aufweisen. Um eine ideale Schruppschneidengeometrie zu erreichen, wird insbesondere vorgeschlagen, diese in Drallform bzw. in einem Winkel zur Fräserachse auszurichten und mit einer Hohlkehle zu versehen, derart, daß diese wie an sich bekannt einen positiven Späneabtrag bewirkt. Zugleich kann dadurch erreicht werden, daß die mit diesen Schruppschneiden erzeugten Späne nicht mit den sich an die Schruppschneiden anschließenden Schlichtschneiden in Berührung kommen. Weiterhin wird vorgeschlagen, die jeweils innenliegende äußerste Flankenschneide einer Schneidplatte in Form einer Phase und in einem Ausmaß von einem beabsichtigten Zustellmaß in der Z-Achse zu gestalten, wodurch der Schneidenwiderstand dieser Schneide verringert wird. Die innen liegenden Flankenschneiden müssen dabei in fast paralleler Ausrichtung zur Achse des Fräsbohrwerkzeuges angeordnet sein, damit sie immer in positiven Schneideinsatz kommen

Des weiteren wird vorgeschlagen, daß, ausgehend von der äußeren Flankenschneide (gleich äußere Umfangsschneide), welche in Drallrichtung bzw. schräg zur Fräsbohrwerkzeugachse angeordnet ist, die zwischen diesen Schneiden liegenden Schneiden in ihrem Stirnschneidenbereich auf etwa in dieser sich daraus ergebenden Richtung gefertigt sind. Dabei ist aus Einsatz-und Fertigungsgründen weiter vorgesehen, daß die Stirnschneiden mit einer kleinen Phase abgestumpft sind Die erwähnten Querschneiden werden, um auch das weiter oben erwähnte Problem bei der Erstellung von Passungen ins volle Material zu lösen, wie folgt eingesetzt: z.B. bei der Erzeugung einer Sacklochpassung wird ein Fräsbohrwerkzeug, das mit Wendeplatten bestückt ist, welche eine durchgehende, nur verkürzte Flankenschneide haben, mit Hilfe einer CNC-gesteuerten Maschine im Gewindezirkularbohrfräsverfahren ins volle Material in Durchmesserversatzes der beabsichtigten Ausnehmung mit jeweils etwas Aufmaß auf die gewünschte Tiefe bewegt, dann führt die Maschine eine Fräsbohrwerkzeugbahnumrundung ohne Z-Achszustellung aus, um einen ebenen Sacklochausnehmungsgrund zu erzeugen. Somit ist der Schruppvorgang abgeschloßen. Beim anschließendem Schlichtvorgang wird der Programmablauf in umgekehrter Reihenfolge wiederholt, d.h. es wird eine weitere Fräsbohrwerkzeugbahnumrundung, lediglich mit den jeweiligen Aufmaßzustellungen (Z- und Durchmessermaß) des beim Schruppvorgang belassenen Ausmaßes ausgeführt. Dann folgt, von dieser Ausgangstiefe ausgehend, zurück zum Ausgangspunkt (gleich Ausnehmungsanfang) der weitere umgekehrte Programmablauf. Das bedeutet, die zu erstellende Passung wird vom Ausnehmungsgrund her erstellt. Dadurch können um ein Vielfaches mehr Passungen mit einem Fräsbohrwerkzeug bzw. mit einer Schneidenbestückung erzeugt werden, da dann der Schneidenbereich, der die Schrupparbeiten ausführt, bei der Erstellung des Endprodukts (Passung) nicht mehr zum Schneideinsatz kommt, weil naturgemäß unscharfe (verschlissene) Schneiden in ihrem Längenmaß (gleich Durchmessermaß) kleiner werden.

Hervorzuheben ist noch, daß die Flankenschneidenlange ab Stirnradius bzw. Phase in etwa das doppelte Z-Achszustellungsmaß pro Umrundung haben soll, damit die als Schlichtschneiden zum Einsatz kommenden Schneiden lediglich beim Schruppvorgang nur in der Umfangswandung der Ausnehmung zum Schneideingriff kommen, was bewirkt, daß dieser Schneideingriff im Verhältnis der Schneiden, die die Schrupparbeit ausführen, bei ca. 1:50 liegt. Unter Inkaufnahme von zwei zusätzlichen Fahrstrecken (gleich jeweils vom Fräsvorgangsende Zurückfahren zum Programmstartpunkt) könnte auch dasselbe Ergebnis erzielt werden, falls das Fräsbohrwerkzeug mit Schneiden bestückt ist, bei welchen die zum Einsatz kommenden äußeren Flankenschneiden nochmals in eine Schrupp- und Schlichtschneide unterteilt sind, weil dort die Schruppschneiden beim Schlichtvorgang bei gleicher Programmwiederholung, lediglich unter Zustellung des belassenen Aufmaßes außer Eingriff sind. Bei diesen Fräsabläufen kommen auch die eingangs erwähnten Querschneiden zum Fräseinsatz.

Dabei kann natürlich mit dieser nochmals unterteilten Schneide (Schrupp- und Schlichtschneide) das Paßmaß auch vom Ausnehmungsgrund her erstellt werden. In der Serienfertigung ist es in den meisten Fällen möglich, mit einem derartigen Werkzeug die Passung in einem Arbeitsgang gleich ins volle Material ohne jegliches Aufmaß zu erstellen.

Diese Fräsabläufe können selbstverständlich auch bei der Erstellung von Durchgangspassungen und sonstige Ausnehmungen, z.B. Taschen ins volle Materialfräsen zur Anwendung kommen. Um dabei bei großen Ausnehmungen oder Gewindebohrungen das Problem des zu großen schneidenfreien Raumes zu lösen, wird vorgeschlagen, auch diesen Raum teilweise mit Schneiden zu bestücken. Dies kann einmal dadurch geschehen, in dem der für die Rundlaufeinstellmöglichkeit eingesetzte Ring teilweise mit Schneidplatten belegt wird, wobei diese einmal auch nicht bis Mitte Fräsbohrwerkzeug reichen, zum andern ist vorgesehen, nur jede zweite oder dritte Umfangsschneide je nach Anzahl der vorhandenen Umfangsscheiden mit zusätzlichen Schneiden in diesem inneren Bereich bis nicht ganz Mitte Fräsbohrwerkzeug zu belegen. bzw. richtet sich dieser schneidenfreie Raum in etwa nach dem Abstand, mit welchem die Stirnschneiden einer Wendeplatte zueinander angebracht sind.

Als weitere Ausgestaltung wird vorgeschlagen, die Wendeplatten in einer breiteren Form zu fertigen, wobei diese dann mehr als zwei Stirnschneiden der eingangs erwähnten Schneidengeometrie aufweisen. Dabei ist ferner vorgesehen, Schneidplatten mit unterschiedlicher Breite einzusetzen, um auch im inneren Bereich des Fräsbohrwerkzeugs einen ausreichenden Freiraum für die anfallenden Kommaspäne zur Verfügung zu haben. Dabei können die sich in ihrer Breite abwechselnden Platten z.B. einmal zwei zu drei oder zwei zu vier oder drei zu vier oder drei oder vier zu fünf usw. Stirnschneiden aufweisen. Ferner kann es bei breiteren Platten vorteilhaft sein, die Anbringung von mehreren Platten auf einer Schneidenbreite vorzusehen. In diesem Zusammenhang ist noch darauf hinzuweisen, daß, falls eine Sacklochausnehmung erstellt werden soll, alle Stirnschneiden auf einer Ebene liegen müssen.

Ein Ring, welcher hierbei mit Wendeplatten bestückt ist, könnte beim Fräseinsatz, wenn nur Taschen ins volle Material erstellt werden sollen, entfernt werden, wobei bei dies em Einsatz der axiale Widerstand reduziert wäre und zugleich Schneidenplatten gespart werden könnten.

Anzumerken ist noch, daß durch die Programmabläufe des Fräsvorganges bei der Erstellung einer Sacklochpassung lediglich im Schruppbereich (gleich 1* Zustellungsbereich in Z-Achse pro Umrundung) das angestrebte Passungsmaß nicht erreicht wird, sofern die als Schruppschneiden zum Einsatz kommenden Schneiden schon abgenutzt sind bzw. die Schneiden als Schrupp- und Schlichtschneiden ausgebildet sind. Dies dürfte sich aber nicht nachteilig auswirken, da das Gegenstück, welches in die Passung eingefügt werden soll, in diesem Bereich im Normalfall mit einer Phase ausgestattet ist.

Im Übrigen kann auf eine maßliche Überprüfung der zu erstellenden Passung fast gänzlich verzichtet werden, da die Schneiden beim Schlichtvorgang nur unwesentlich in Schneideingriff kommen und somit die Stabilität der hier zum Einsatz kommenden Frasbohrwerkzeuge fast immer ausreichend sein dürfte, selbst wenn ganz kleine Passungen erzeugt werden mussen, in welchem Falle dann das Fräsbohrwerkzeug zwar mit einer entsprechenden Schneidgeometrie ausgestattet, jedoch unter Verzicht auf den Einsatz von Schneidplatten aus Vollmaterial bestehend ausgeführt ist.

Um bei der Wendeplattenausführung die Platten vom jeweiligen Durchmesser des-Fräsbohrwerkzeugschaftes unabhängig ausreichend und maßgetreu sowie auf einfache Weise befestigen zu können, wird weiterhin vorgeschlagen, wie an sich bekannt, die Platten mit mindestens einer Bohrung (vorzugsweise mittig zur Platte) für die Hindurchführung einer Befestigungsschraube auszustatten. Um die Platte am Fräsbohrwerkzeugschaft verdrehsicher, sowie auf Umschlag exakt gleich und positionsgenau befestigen zu können, ist nach einem weiteren Merkmal der Erfindung ferner vorgesehen, die Schneidplatten mit mindestens einer Nut bzw. mit zwei Nuten und mehr auszustatten, wobei diese in Kreuzform angebracht sein können. Den Nutausnehmungen sind als Ausricht- und Haltemittel spielfrei in sie eingreifende dünnwandige Röhrchen zugeordnet. Der Plattensitz im Fräsbohrwerkzeug ist seinerseits mit abgewandelten Nut-Ausnehmungen versehen. Die im Plattensitz angeordneten Nut-Ausnehmungen weisen eine der runden Querschnittsform der Röhrchen gegenüber abgewandelte Querschnittsform auf, derart, daß die Nutausnehmungen im Plattensitz bei einem Durchmesser des Röhrchens von z.B. 2 mm diese Ausnehmung in Form einer Nutausnehmung mit einer Breite von ca. 1.97 mm und einer Ausnehmungstiefe von ca. 1.28 mm sowie jeweils einen Eckradius von ca. 0.5 mm aufweisen. Durch diese Maßnahmen wird einmal das Röhrchen in diesen Ausnehmungen selbstsichernd gehalten, da es bei der Befestigung der Wendeplatte über die Hälfte seines Durchmessers in diese Nutausnehmungen eintaucht bzw. in die Nutausnehmung eingepresst wird. Zum andern kann bei der Festlegung der Schneidplatten am Werkzeugschaft, sei es durch eine Schraube oder durch eine Klemme, das dort entstehende überflüßige Material des Röhrchens in diese geschaffenen Freiräume auszuweichen. Dabei entsteht überschüssiges Material, dadurch, daß die Ausnehmung in der Schneidenplatte bei dem erwähnten Bemessungs-Beispiel nur auf eine Radiustiefe, von ca. 0.66 mm gefertigt ist. Mit dieser Gestaltung wird erreicht, daß bei der Festlegung der Wendeplatte am Werkzeugschaft ein allseitiger Druck auf die Röhrchen entsteht, und dadurch das überflüssige Material durch Verformung der Röhrchen in die geschaffenen Freiräume in den Nuten abgedrängt wird und dadurch die Wendeplatte immer voll mit großer Wiederholgenauigkeit am Plattensitz zum Anliegen kommt.

Diese erfindungsgemäße Gestaltung der Ausricht-und Zentriermittel gestattet es auf zusätzliche seitliche Anlageflächen für die Wendeplatten zu verzichten, sofern mehr als eine Nutausnehmung vorhanden ist und die Nutausnehmungen zudem in Kreuzform angebracht sind.

Zur Lösung der Probleme bei der Erzeugung von Gewinden ins volle Material wird vorgeschlagen, auch die als Wendeplatte geformte Schneideplatte, natürlich mit gleichem Plattensitz und gleicher Schruppschneidengeometrie zu fertigen, um sie dann gegebenfalls am Fräsbohrwerkzeugschaft des für die Fertigung von Ausnehmungen vorhandenen Fräsbohrwerkzeuges einsetzen zu können. Um die bessere Ausnutzung der kernlocherzeugenden Schneiden zu ermöglichen, wird vorgeschlagen, dem gewindeerzeugenden Schneidezahn, mindestens einen weiteren gewindeerzeugenden Zahn, welcher in seiner umlaufenden Schneidenform allseits in seinem Ausmaß reduziert ist, dem gewindeerzeugenden Zahn vorzuschalten, wodurch der schon vorhandene Zahn nur noch eine Schlichtfunktion hat.

Die Erfindung ist in der nachfolgenden Beispielsbeschreibung anhand einiger in der Zeichnung dargestellter Ausführungsbeispiele im einzelnen beschrieben.

In der Zeichung zeigt die
Fig. 1 eine Wendeschneidplatte in der Frontansicht zum Passungsfräsen ins volle Material mit zurückgesetzten unterbrochenen Flankenschneiden;
Fig. 2 diese Wendeplatte in Draufsicht;
Fig. 3 die gleiche Wendeplatte mit nochmals unterteilten äusseren Flankenschneiden (Schrupp- und Schlichtschneiden).

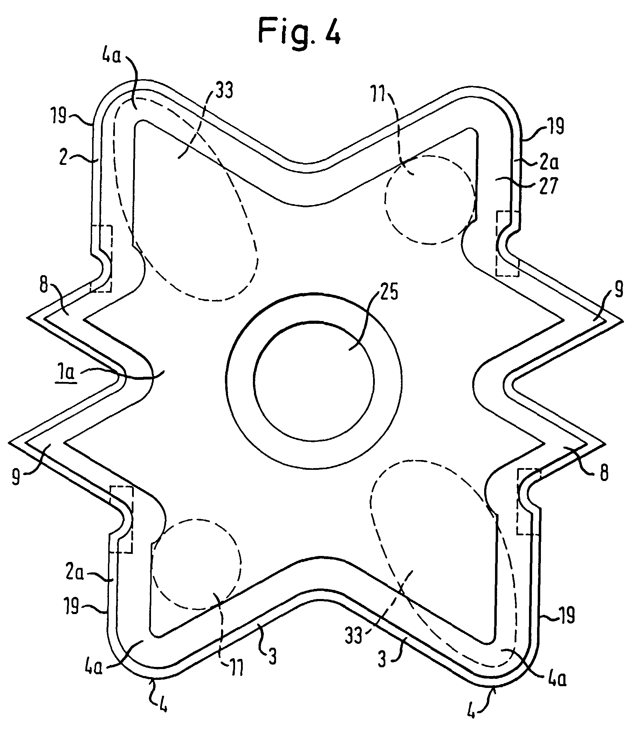

Fig. 4 eine Wendeplatte zum Gewindefräsen ins volle Material mit allseits reduziertem, vorgeschaltetem Gewindezahn.
Fig. 5 einen Wendeplattenträger für die Aufnahme von Wendeplatten zum Gewindefräsen als auch zum Passungsfräsen mit innerer Rundlaufeinstellmöglichkeit;
Fig. 6 einen Schnitt C-C im Plattenbereich dieses Fräsbohrwerkzeugs mit Plattensitz:
Fig. 7 die Wendeplatte in der Seitenansicht;
Fig. 8 eine auf einem Trägermaterial aufgebrachte Wendeplatte;
Fig. 9 eine Wendeplatte zum Passungsfräsen mit drei Bohrungen und mehr als zwei Stirnschneiden;
Fig. 10 eine Wendeplatte zum Gewindefräsen;
Fig. 11 eine Wendeplatte zum Passungsfräsen mit Phase;
Fig. 12 Fräsbohrwerkzeug in Vollmaterialausführung zum Gewindefräsen ins volle Material bei gehärtetem Werkstoff;
Fig. 13 Wendeplattenträger mit verschiedenen breiten Platten und mit Rundlaufeinstellmöglichkeit über die vorhandenen zweiten Bohrungen (im Schnitt);
Fig. 14 WendeplattenFräsbohrwerkzeug mit Rundlaufeinstellmöglichkeit über einen eingebrachten Ring und Madenschrauben (im Schnitt);
Fig. 15 Wendeplattenträger mit dem eingebrachten Ring als Plattenträger (im Schnitt);

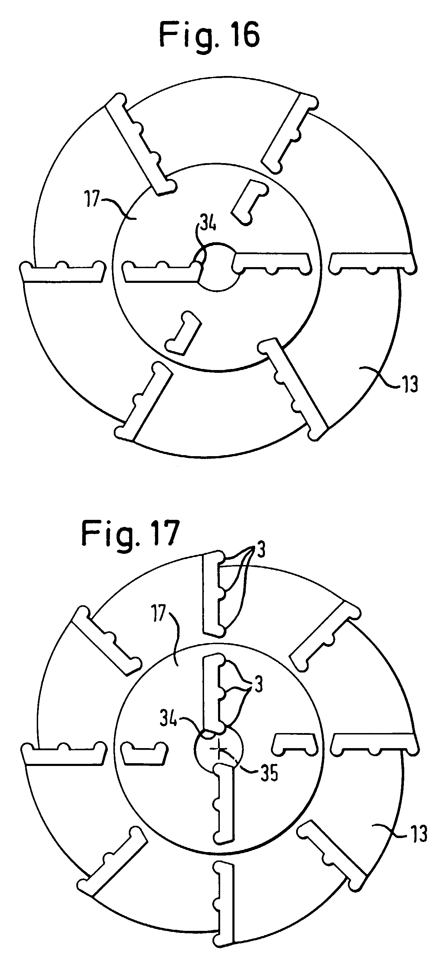

Fig. 16 Wendeplattenträger in Draufsicht mit sechs Umfangsschneiden;
Fig. 17 Wendeplattenträger in der Draufsicht mit acht Umfangsschneiden;
Fig. 18 - 20 eine weitere Variante des Klemmsystems mit Hohlkugel und entsprechenden Ausnehmungen;

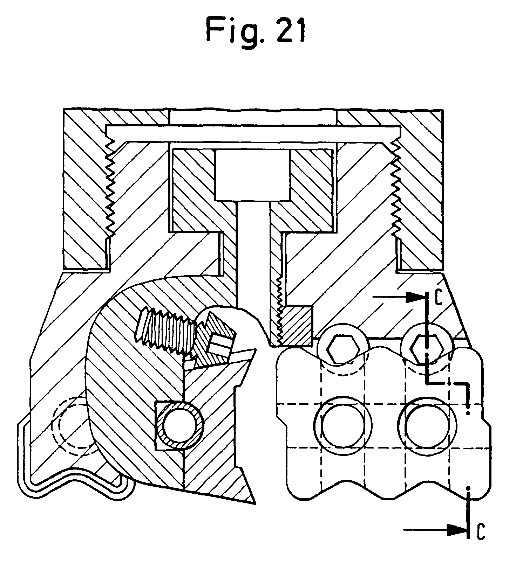

Fig. 21 WendeplattenFräsbohrwerkzeug im Teilschnitt mit Wendeplatten, die mehr als zwei Stirnschneiden aufweisen.

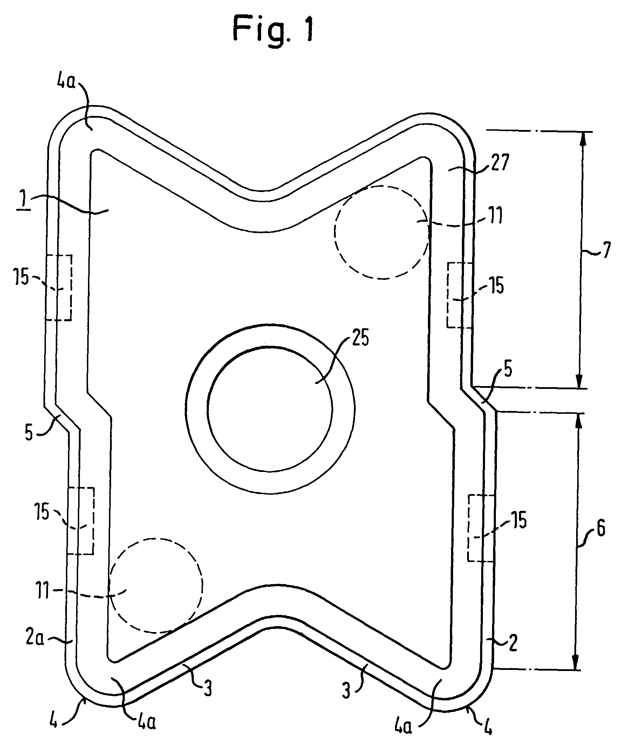

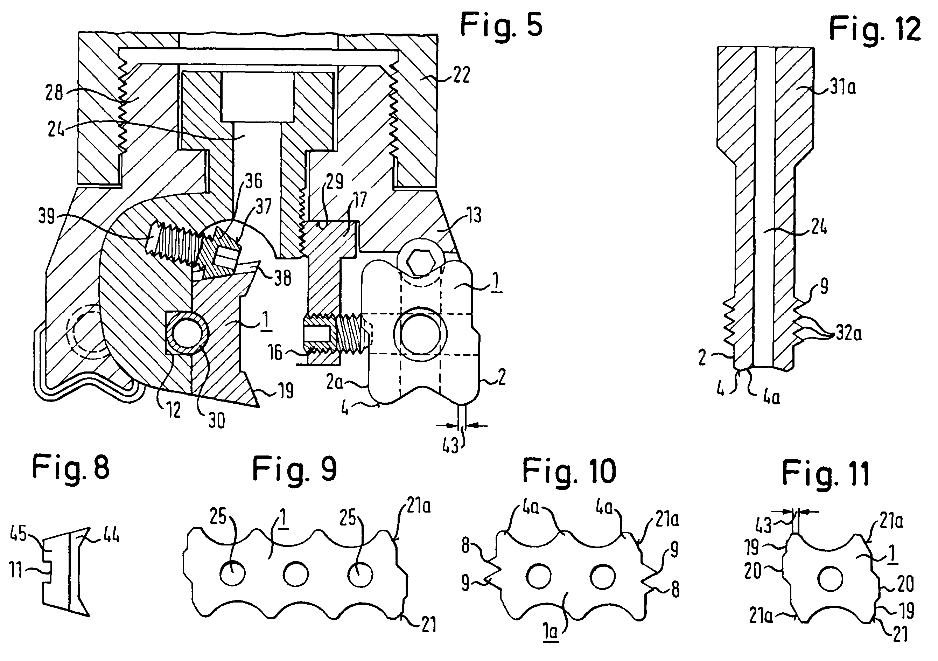

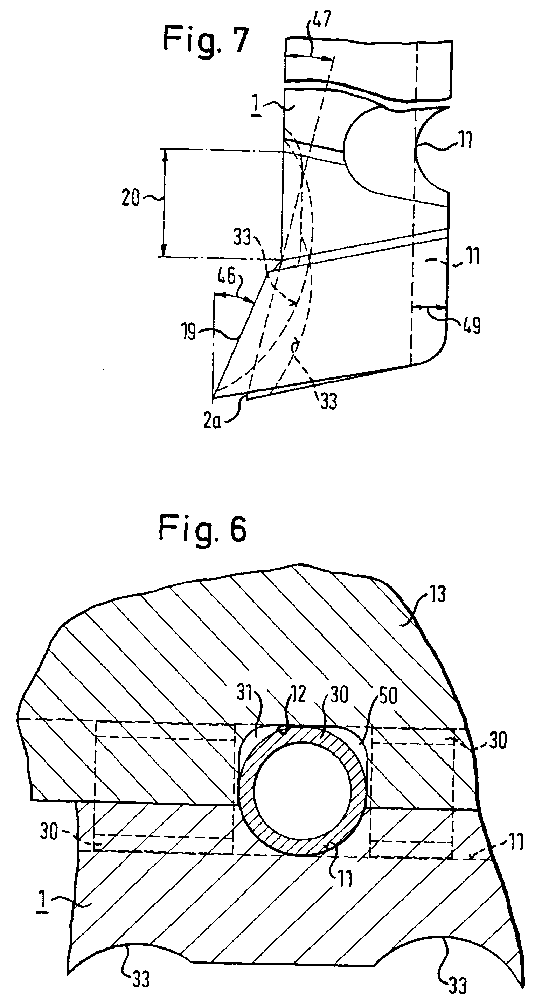

Durch die beiderseitige Anbringung von V-förmigen Schneiden 4a sowie äußere Flankenschneiden 2 innere Flankenschneiden 2a und untere Flankenschneiden 3, wobei die Stirnschneiden durch einen Radius gebildet sind, kann eine so gebildete Schneidplatte als Wendeplatte 1 eingesetzt werden (Fig. 1). Dabei kann der Übergang von den Flankenschneiden 2 zu den Stirnschneiden 4 auch durch eine Phase 21 bzw. 21a gebildet sein (Fig. 11). Diese Phase 21a erstreckt sich in ihrem Längenmaß auf eine Länge gleich Zustellmaß in Z-Achse, womit dadurch in diesem innen liegenden Schneidenbereich durch diese Schneide die gesamte Zustelltiefe S abgetragen wird.

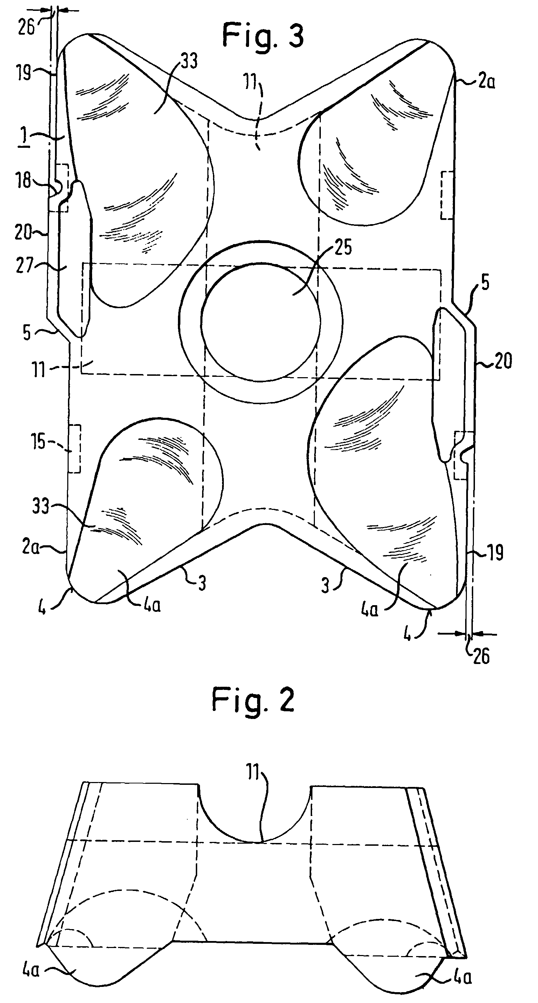

Die äußere Flankenschneide 2 ist durch eine Querschneide 5 in einem zum Schneideinsatz kommenden Bereich 6 und einem außer Schneideingriff kommenden Teil 7 gefertigt. Dabei kann der zum Schneideinsatz kommende Teil 6 nochmals durch eine Querschneide 18 (in Fig. 3) unterteilt sein und zwar im vorderen Bereich als Schruppschneide 19 und im anschließenden Teil leicht vorstehend 26 angebracht als Schlichtschneide 20. Dabei ist im Bereich der Schlichtschneide 20 eine Spanleitstufe 27 vorgesehen. Die Schruppschneide 19 ist mit einer Hohlkehle 33 belegt, wobei diese verhindern soll, daß beim Späneabtrag die erzeugten Späne mit der sich anschließenden Schlichtschneide 20 in Berührung kommen (Fig. 7). Dabei ist diese äußerste Schruppschneide 19 in einem Winkel 46 zur Fräsbohrwerkzeugachse 35 erstellt. Um auch bei der innenliegenden Schruppschneide immer einen positiven Späneabtrag zu erreichen, ist dort diese innere Flankenschneide 2a in fast paralleler Richtung 47 zur Fräsbohrwerkzeugachse 35 erstellt (Fig. 7).

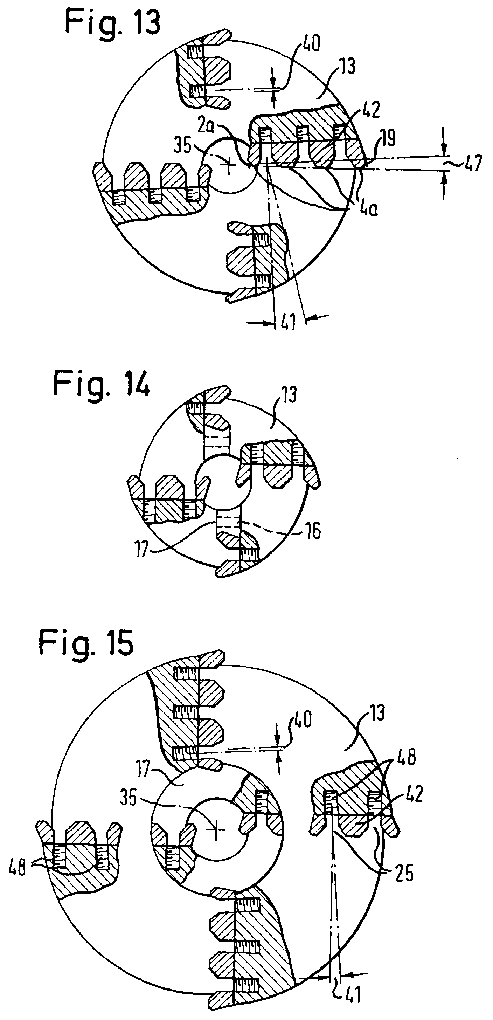

Die zwischen diesen Schneiden 4a liegenden Schneiden sind in einer Art Verbindungslinie zwischen diesen jeweils äußeren Flankenschneiden 19, 2a erstellt (Fig. 13).

Des weiteren ist für die Befestigung der Platte 1 am Fräsbohrwerkzeugschaft 22 bzw. am Wendeplattenträger 13 eine Bohrung 25 in dieser für die Hindurchführung einer Schraube vorgesehen und ein Gewinde 48 am Wendeplattenträger 13 angebracht. Dabei weisen diese Platten 1 auch mehr als eine Bohrung 25 auf (Fig. 9 - 11, 13 - 15) und die Anzahl der angebrachten Schneiden 4a ist größer als zwei. Mit dieser zusätzlichen Bohrung(en) können diese Platten auf Rundlauf eingestellt werden. Dabei ist einmal eine Gewindeausnehmung 48 im Wendeplattenträger 13 genau mittig zur Bohrung in der Wendeplatte 1 erstellt. Die zweite Gewindebohrung 48 ist etwas abweichend zur Bohrung 25 der Platte 1 erstellt, wobei diese Abweichung auch dadurch erreicht wird, daß diese Gewindeausnehmung in einer Schräge zur Fräsbohrwerkzeugachse 41 erstellt ist. Diese Lösung ist v.a. aus Fertigungsgründen in manchen Fällen vorteilhafter.

Für die Fixierung der Platte 1 ist vorgesehen, die Platte mit Nuten 11 zu fertigen, wobei diese in Kreuzform angebracht sind. Diese Nuten richten sich in Form und Ausnehmungstiefe 49 nach den bei der Festlegung der Platte 1 am Wendeplattenträger 13 verwendeten dünnwandigen Röhrchen 30, wobei diese Nut nur ca. eine Ausnehmungstiefe von ca. 1/3 dieser Röhrchendurchmesser aufweist. Die im Wendeplattenträger eingebrachte Ausnehmung 12 ist in Pressitzform zum Röhrchen gefertigt und weist eine Ausnehmungstiefe von ca. 62 % des Röhrchendurchmessers auf. Ferner sind Freiräume 31 für das bei der Festlegung der Platte am Fräsbohrwerkzeugschaft entstehende Verdrängungsmaterial 50 erstellt. Die Ausrichtung der Wendeplatten 1 in Z-Achse erfolgt über eine in Schräglage eingebrachte Imbusschraube 36 im Wendeplattenträger 13, wobei diese Schraube mit einer Konusfläche 37 belegt ist und durch Herausdrehen aus ihrem Gewindesitz mit dieser Konusfläche in der kreisförmigen Ausnehmung 38 der Wendeplatte zum Anliegen kommt (Fig. 5).

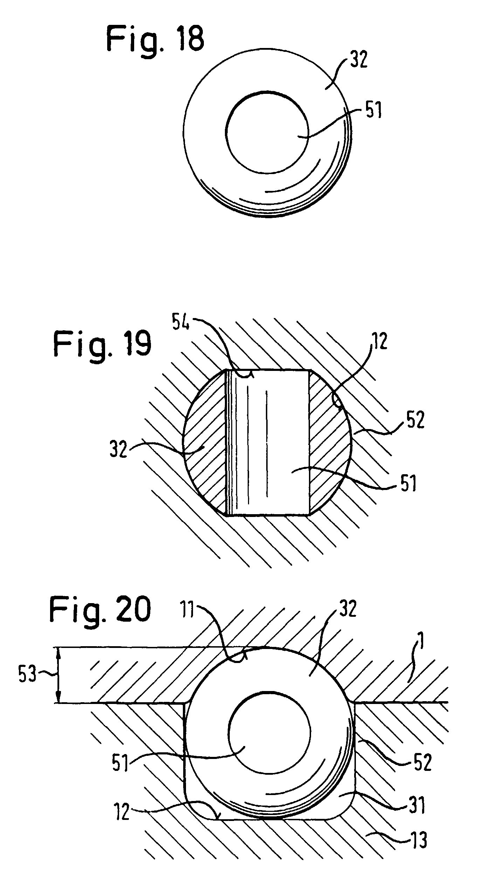

Die Fixierung der Wendeplatten 1 könnte auch mit Hohlkugeln (Fig. 18 - 20) erfolgen. Dabei sind die Kugeln 32 mit einer durchgehenden Bohrung 51 versehen, und die Ausnehmung am Wendeplattenträger 13 ist im Pressitz im Bereich der übriggebliebenen Kugelform 52 erstellt und seine Fertigungstiefe, und die erforderlichen Freiräume 31 sowie die Ausnehmungstiefe 53 in Form der Kugel 32 in der Wendeplatte 1 ist mit dem bereits aufgeführten Systemen (aufgezeigt in Fig. 6) im gleichen Verhältnis erstellt. Die durch die Durchbohrung der Kugel entstehende gerade Fläche 54 wird in entsprechender Ausnehmung im Wendeplattenträger 13 fast spielfrei geführt. Bei diesem Fixiersystem müssen immer mindestens zwei Kugeln pro Fixierung zum Einsatz kommen Des weiteren ist vorgesehen, in die Ausnehmung des Wendeplattenträgers 13 einen Ring 17 anzubringen, der durch eine Imbusschraube 28 sowie Anlageflächen 29 positionsgenau gehalten wird. Dieser sollte im Anlagebereich 15 der Wendeplatten mit Madenschrauben 16, die von außen mit einem Schlüssel bewegt werden können, versehen werden, um die Wendeplatten durch Druckausübung auf den Plattensitz im µm-Bereich zum Zweck der Rundlaufeinstellung nach außen bewegen zu können. Ferner ist vorgesehen, den Fräsbohrwerkzeugschaft 22 sowie den Madenschraubenträgerring 17 als auch die Imbusschraube 28 mit einer Bohrung 24 zum Zwecke einer ausreichenden Kühlmitteldurchführung zu versehen. Zum Gewindefräsen ins volle Material ist die Wendeplatte 1a mit einem zusätzlichen, in seinen Ausmaßen allseits gegenüber dem gewindeerzeugenden Zahn 9 verkleinerten Gewindezahn 8 ausgestattet. Dabei weist diese Platte 1 die gleiche Schruppschneidengeomtrie wie die Wendeplatte 1 auf. Um den Einsatz von neuen bzw. neuesten Schneidstoffen zu ermöglichen, ist der Schneidstoff 44 in etwa der Form der jeweiligen Wendeplatten 1 auf einem Trägermaterial 45 in Form der Wendeplatte aufgebracht, wobei das Trägermaterial mit dem hier beinhalteten Fixier- und Haltesystem ausgestattet ist. Der z.B. aus Vollmaterial dargestellte Fräsbohrwerkzeug 31a ist, um auch gleich ein Gewinde ins volle Material bei gehärteten Werkstoffen einbringen zu können, mit zusätzlich nochmals als Vorschneidezähne gleich allseits in ihren Schneidenausmaß reduzierte Gewindezähne 32a allmählich ansteigend zum eigentlichen gewindeerzeugenden Zahn 9 ausgerüstet. Dabei sind diese Schneiden abwechselnd schneidend in Kreuzverzahnung angebracht.

## Patentansprüche

1. Fräsbohrwerkzeug mit einem Schaft (22) zur Herstellung von kreisrunden Ausnehmungen, wie Passungen, Sacklochausnehmungen oder Gewindebohrungen, mit innerhalb gewisser Grenzen beliebigem Durchmesser im vollen Material, wobei das Fräsbohrwerkzeug drehangetrieben und mit einer Kreisbahn um die Ausnehmungsachse umlaufend axial verschiebbar, z.B. auf einer CNC-gesteuerten Werkzeugmaschine, geführt und mit an vermittels an ihrer dem Werkzeugschaft (22) zugeordneten Anlagefläche angeordneter Ausricht-und Zentriermittel sowie einem Befestigungsmittel in einer ausgerichteten Lage angeordneten Schneidplatten (1) an deren Schneiden (4a) zum Erzeugen einer Kernlochbohrung versehen sind, und wobei die Schneiden (4a) eine durch eine untere Flankenachneide (3) gebildete, nach innen gerichtete V-förmige Schneidgeometrie aufweisen und gleichzeitig innere (2a) und äußere Flankenschneiden (2) vorgesehen sind, deren Schneidenübergänge durch Radien gebildet sind
dadurch gekennzeichnet, daß
die wenigstens eine nach innen gerichtete V-förmige Schneidgeometrie bildenden Schneiden (4a) zusammen mit wenigstens den unteren Flankenschneiden (3), den inneren (2a) und äußeren Flankenschneiden (2) sowie deren kurzen geraden Abschnitten (43) der Schneiden (4a) paarweise und zueinander um 180° versetzt an einer Wendeplatte (1) angeordnet sind und daß die äußere Flankenschneide (2) einer Wendeplattenseite vermittels wenigstens einer schräg zu ihrer jeweiligen Schneidenebene ausgerichteten Querschneide (5) in einen schneidenden (6) und einen nicht schneidenden Teil (7) unterteilt sind, wobei die beiden Flankenschneidenteile (6 und 7) gegeneinander versetzt angeordnet sind und daß ferner die Flankenschneiden (2) einer Wendeplattenseite vermittels einer weiteren Querschneide (18) in eine Schrupp-(19) und eine Schlichtschneide (20) aufgeteilt sind, wobei die Schlichtschneide (20) geringfügig (26) über die Schruppschneide (19) vorsteht.

2. Fräsbohrwerkzeug nach Anspruche 1, dadurch gekennzeichnet, daß die der Befestigung der Wendeplatte (1) am Wendeplattenträger (13) zugeordneten Ausricht- und Zentriermittel halbkreis- oder kalottenähnliche Ausnehmungen (11) in der Wendeplatte (1) und Nut-bzw. Kalottenausnehmungen (12) im Wendeplattenträger (13) sowie in diese eingreifende dünnwandige und elastisch verformbare Hohlkörper, insbesondere Röhrchen (30) oder Hohlkugeln (32), umfassen.

3. Fräsbohrwerkzeug nach einem der Ansprüche 1 und 2, dadurch gekennzeichnet, daß die Tiefe der halbkreis-oder kalottenähnlichen Ausnehmungen (11) in der Wendeplatte (1) einem Bruchteil, etwa einem. Drittel des Hohlkörperdurchmessers, insbesondere Röhrchen-bzw. Kugeldurchmessers entspricht und daß die Tiefe der Nut-(12) oder Kalottenausnehmungen (11) im Wendeplattenträger (13) um einen geringen Betrag kleiner ist als zwei Drittel des Durchmessers der dünnwandigen, elastisch verformbaren Hohlkörper, Röhrchen (30) oder Kugeln (32), wobei Freiräume (31) für die Aufnahme des durch die Verformung der Röhrchen (30) bei der Festlegung der Wendeplatte (1) am Werkzeugschaft entstehende Abdrängungsmaterial, vorgesehen sind.

4. Fräsbohrwerkzeug nach einem der Ansprüche 1 bis 3, dadurch gekennzeichnet, daß die als Schruppschneiden (19, 2a) ausgelegten Schneiden in einem Winkel (46 - 47) zur Werkzeugachse (35) ausgerichtet sind und eine Hohlkehle (33) aufweisen.

5. Fräsbohrwerkzeug nach einem der Ansprüche 1 bis 4, dadurch gekennzeichnet, daß sowohl die äußere und innere Stirnschneide (19, 2a), als auch die jeweils innenliegende Stirnschneide (4) unter unterschiedlichen Winkeln ausgerichet sind und die Anzahl der V-förmigen Schneiden (4a) pro Plattenseite größer als zwei ist.

6. Frasbohrwerkzeug nach einem der Ansprüche 1 bis 5, dadurch gekennzeichnet, daß über eine Schneidenbreite des Wendeplattenträgers (13) hin mehrere mit V-formigen Schneiden (4a) bestückte Wendeplatten (1) angeordnet sind, wobei selbst bei der grössten Anzahl von angebrachten Schneiden (4a) diese nicht bis ganz Mitte Fräsbohrwerkzeuges (35) reicht.

7. Fräsbohrwerkzeug nach einem der Ansprüche 1 bis 6, dadurch gekennzeichnet, daß der Übergang der Stirnschneiden (4) zu den Flankenschneiden (2, 2a) durch eine Phase (21, 21a) gebildet ist.

8. Fräsbohrwerkzeug nach einem der Ansprüche 1 bis 7, dadurch gekennzeichnet, daß die Schneidengeometrien an Wendeplatten in Dreiecksform angebracht sind.

9. Fräsbohrwerkzeug mit einem Schaft (22) zur Herstellung von kreisrunden Ausnehmungen, wie Passungen, Sacklochausnehmungen oder Gewindebohrungen, mit innerhalb gewisser Grenzen beliebigem Durchmesser im vollen Material, wobei das Fräsbohrwerkzeug drehangetrieben und mit einer Kreisbahn um die Ausnehmungsachse umlaufend axial verschiebbar, z.B. auf einer CNC-gesteuerten Werkzeugmaschine, geführt und mit an vermittels an ihrer dem Werkzeugschaft (22) zugeordneten Anlagefläche angeordneter Ausricht-und Zentriermittel sowie einem Befestigungsmittel in einer ausgerichteten Lage angeordneten Schneidplatten (1) an deren Schneiden (4a) zum Erzeugen einer Kernlochbohrung versehen sind, und wobei die Schneiden (4a) eine durch eine untere Flankenschneide (3) gebildete, nach innen gerichtete V-förmige Schneidgeometrie aufweisen und gleichzeitig innere (2a) und äußere Flankenschneiden (2) vorgesehen sind, deren Schneidenübergänge durch Radien gebildet sind
dadurch gekennzeichnet, daß
die wenigstens eine nach innen gerichtete V-förmige Schneidgeometrie bildenden Schneiden (4a) zusammen mit wenigstens den unteren Flankenschneiden (3), den inneren (2a) und äußeren Flankenschneiden (2) sowie deren kurzen geraden Abschnitten (43) der Schneiden (4a) paarweise und zueinander um 180° versetzt an einer Wendeplatte (1) angeordnet sind und daß die äußere Flankenschneide (2) einer Wendeplattenseite vermittels wenigstens einer schräg zu ihrer jeweiligen Schneidenebene ausgerichteten Querschneide (5) in einen schneidenden (6) und einen nicht schneidenden Teil (7) unterteilt sind, wobei die beiden Flankenschneidenteile (6 und 7) gegeneinander versetzt angeordnet sind und daß an die äußeren Flankenschneiden (2) der Wendeplatte (1) und diese überragend ein der Profilform eines zu erzeugenden Gewindes entsprechend gestalteter, gewindeerzeugender Schneidzahn (9) angeschlossen ist und daß diesem gewindeerzeugenden Schneidzahn ein in seinem Ausmaß der Profilform des zu erstellenden Gewindes gegenüber reduzierter Gewindezahn (8) vorgeschaltet ist.

10. Verfahren zur Herstellung von kreisrunden Ausnehmungen, wie Passungen, Sacklochausnehmungen oder Gewindebohrungen, mit innerhalb gewisser Grenzen beliebigem Durchmesser im vollen Material, mittels eines einen Schaft aufweisenden Fräsbohrwerkzeuges, wobei das Fräsbohrwerkzeug drehangetrieben und mit einer Kreisbahn um die Ausnehmungsachse umlaufend axial verschiebbar, z.B. auf einer CNC-gesteuerten Werkzeugmaschine, geführt und mit an Schneidplatten angeordneten Stirnschneiden zum Erzeugen einer Kernlochbohrung versehen ist, und wobei das Fräsbohrwerkzeug mit wenigstens eine durch eine untere Flankenschneide (3) gebildete, nach innen gerichtete V-förmige Schneidgeometrie bildenden Schneiden (4a) und wenigstens mit den inneren (2a) und mit äußeren Flankenschneiden (2) sowie den kurzen geraden Anschhnitten (43) der Schneiden (4a) ausgestattet ist, und wobei ferner die äußeren Flankenschneiden (2) jeweils durch wenigstens eine Querschneide (5) in einen Schneideneingriffsbereich (6) und einen außer Schneideingriff befindlichen Bereich (7) aufgeteilt sind, sowie die Flankenschneiden (2) einer Wendeplattenschneide vermittels einer weiteren Querschneide(18) in eine Schrupp-(19) und eine Schlichtschneide (20) aufgeteilt sind, derart, daß die Schlichtschneide (20) geringfügig (Betrag 26) über die Schruppschneide (19) vorsteht, und wobei im Übrigen die Schneidgeometrien zur Bildung einer Wendeplatte jeweils paarweise und zueinander um 180° versetzt an den Schneidplatten angeordnet sind,
dadurch gekennzeichnet, daß
die beabsichtigte Ausnehmung im vollen Material zunächst in voller Tiefe und mit einem Aufmaß erstellt wird, wobei das Fräsbohrwerkzeug mit einem Schlichtaufmaß drehangetrieben im Zirkularfräsbohrverfahren bis Z-Achsmaß bewegt wird und anschließend zur Erzeugung einer ebenen Grundfläche ein Umlauf ohne Z-Achsenzustellung ausgeführt wird, womit der vorgesehene Schruppvorgang beendet ist,
und daß nachfolgend die Ausnehmungsoberfläche in einem Schlichtvorgang feinbearbeitet bzw. auf Fertigmaß bearbeitet wird, in der Weise, daß der gleiche Programmablauf wie bei der Herstellung der Ausnehmung unter Zustellung der belassenen Aufmaße in umgekehrter Reihenfolge wiederholt wird.

## Claims

1. Milling and boring tool with a shaft (22) for producing circular openings, such as fits, blind hole bores or threaded bores, of any diameter within certain limits in solid material, wherein the milling and boring tool is rotary driven and is guided axially displaceably in a circular orbit about the hole axis, e.g. on a CNC-controlled machine tool, and with alignment and centring means arranged on the bearing surface for the tool shaft (22) and a securing means cutting discs (1) arranged in an aligned position are provided on the cutting edges (4a) for producing a core removing bore, and wherein the cutting edges (4a) are designed geometrically to have inwards pointing V-shape formed by a bottom side cutting edge (3) and at the same time inner (2a) and outer side cutting edges (2) are provided, the transitions between which are in the form of radii,
characterised in that
the cutting edges (4a) having at least the cutting geometry of an inwards pointing V together with at least the bottom side cutting edges (3), the inner (2a) and outer side cutting edges (2) and the short straight sections (43) of the cutting edges (4a) are arranged in pairs and offset by 180° relative to one another on a turning plate (1), and in that the outer side cutting edge (2) of a turning plate side by means of least one transverse cutting edge (5) aligned at an angle to its respective cutting plane is divided into a cutting part (6) and a non-cutting part (7), whereby the two side cutting parts (6 and 7) are arranged offset relative to one another,
and in that in addition the side cutting edges (2) of one turning plate side are divided by means of an additional transverse cutting edge (18) into a rough cutting edge (19) and smooth cutting edge (20), whereby the smooth cutting edge (20) projects slightly (26) over the rough cutting edge (19).

2. Milling and boring tool according to claim 1, characterised in that the alignment and centring means for securing the turning plate (1) onto the turning plate carrier (13) comprise semi-circular or dome-like recesses (11) in the turning plate (1) and groove or dome-like recesses (12) in the turning plate carrier (13), and thin walled and elastically deformable hollow bodies engaging therein, in particular tubes (30) or hollow spheres (32).

3. Milling and boring tool according to one of claims 1 and 2, characterised in that the depth of the semi-circular or dome-like recesses (11) in the turning plate (1) corresponds to a fraction, roughly a third of the hollow body diameter, in particular of the tube or sphere diameter, and in that the depth of the groove (12) or domed recesses (11) in the turning plate carrier (13) is slightly smaller than two thirds of the diameter of the thin-walled, elastically deformable hollow bodies, tubes (30) or spheres (32), wherein free spaces (31) are provided for receiving the forced material produced by the deformation of the tubes (30) on securing the turning plate (1) onto the tool shaft.

4. Milling and boring tool according to one of claims 1 to 3, characterised in that the cutting edges designed as rough cutting edges (19, 2a) are aligned at an angle (46-47) to the tool axis (35) and have a groove (33).

5. Milling and boring tool according to one of claims 1 to 4, characterised in that both the outer and inner end cutting edges (19, 2a) and the internal end cutting edge (4) are aligned at different angles and the number of V-shaped cutting edges (4a) per plate side is greater than two.

6. Milling and boring tool according to one of claims 1 to 5, characterised in that over a cutting edge width of the turning plate carrier (13) several turning plates (1) with V-shaped cutting edges (4a) are arranged, whereby even with the greatest number of attached cutting edges (4a) this does not extend right to the centre of the milling and boring tool (35).

7. Milling and boring tool according to one of claims 1 to 6, characterised in that the transition of the end cutting edges (4) to the side cutting edges (2, 2a) is formed by a phase (21, 21a).

8. Milling and boring tool according to one of claims 1 to 7, characterised in that the cutting edge geometries are attached to turning plates in triangular form.

9. Milling and boring tool with a shaft (22) for producing circular openings, such as fits, blind hole bores or threaded bores, of any diameter within certain limits in solid material, wherein the milling and boring tool is rotary driven and is guided axially displaceably in a circular orbit about the hole axis, e.g. on a CNC-controlled machine tool, and with alignment and centring means arranged on the bearing surface for the tool shaft (22) and a securing means cutting discs (1) arranged in an aligned position are provided on the cutting edges (4a) for producing a core removing bore, and wherein the cutting edges (4a) are designed geometrically to have an inwards pointing V-shape formed by a bottom side cutting edge (3), and at the same time inner (2a) and outer side cutting edges (2) are provided, the transitions between which are in the form of radii,
characterised in that
the cutting edges (4a) having at least the cutting geometry of an inwards pointing V together with at least the bottom side cutting edges (3), the inner (2a) and outer side cutting edges (2) and the short straight sections (43) of the cutting edges (4a) are arranged in pairs and offset by 180° relative to one another on a turning plate (1), and in that the outer side cutting edge (2) of a turning plate side by means of least one transverse cutting edge (5) aligned at an angle to its respective cutting plane is divided into a cutting part (6) and a non-cutting part (7), whereby the two side cutting parts (6 and 7) are arranged offset relative to one another,
and in that a thread-making cutting tooth (9) designed according to the profile of the thread to be produced is attached to the outer side cutting edges (2) of the turning plate (1) and projects over the latter, and in that in front of this thread-making cutting tooth a threaded tooth (8) smaller than the profile form of the thread to be produced is formed.

10. Method for producing circular openings, such as fits, blind hole bores or threaded bores, of any diameter within certain limits in solid material, by means of a milling and boring tool with a shaft, whereby the milling and boring tool is rotary driven and is guided axially displaceably in a circular orbit about the hole axis, e.g. on a CNC-controlled machine tool, and is provided with end cutting edges arranged on cutting discs for producing a core removing bore, and whereby the milling and boring tool is equipped with at least one cutting edge (4a) formed by a bottom side cutting edge (3) with an inwards pointing V-shaped cutting geometry and with at least the inner (2a) and outer side cutting edges (2) and the short straight sections (43) of the cutting edges (4a), and whereby in addition the outer side cutting edges (2) respectively are divided by at least one transverse cutting edge (5) into a cutting edge engagement zone (6) and a zone outside the cutting edge engagement (7), and the side cutting edges (2) of a turning plate cutting edge by means of an additional transverse cutting edge (18) are divided into a rough cutting edge (19) and a smooth cutting edge (20), in such a way that the smooth cutting edge (20) projects slightly (by amount 26) over the rough cutting edge (19), and whereby also the geometries of the cutting edges for forming a turning plate are arranged in pairs and offset relative to one another by 180° on the cutting plates,
characterised in that
the desired hole in solid material is made firstly to the full depth and with an allowance, whereby the milling and boring tool with a smoothing allowance is rotary driven in the circular milling boring procedure to the Z-axis dimension, and afterwards to form a flat base surface a revolution without Z-axis advancement is performed, whereby the rough procedure is ended,
and in that afterwards the hole surface is finished in a smoothing procedure or worked to the finished size, in such a way that the same program sequence used on making the hole is repeated in reverse order with the advance of the left allowances.

## Revendications

1. Outil de perçage et de fraisage avec un corps (22) pour usiner dans du matériau plein des évidements circulaires, tels que des ajustements, des trous borgnes ou des alésages taraudés de diamètre quelconque compris à l'intérieur de limites déterminées, étant observé que
• l'outil de perçage-fraisage qui est disposé par exemple sur une machine-outil à commande CNC, est entraîné en rotation et est déplaçable axialement tout en tournant autour de l'axe de l'évidement sur une trajectoire circulaire,
• l'outil de perçage-fraisage comporte des plaques de coupe (1) avec des lames (4a) pour usiner un avant-trou, disposées dans en position alignée grâce à des moyens d'alignement et de centrage prévus sur la surface d'appui associée au corps (22) de l'outil et grâce à un moyen de fixation,
• les lames (4a) présentent une configuration de coupe ayant la forme d'un V orienté vers l'intérieur, formée par une lame inférieure (3),
• il est prévu aussi des lames latérales intérieures (2a) et extérieures (2), les zones de transition entre les lames étant développées en forme de rayon,
*caractérisé en ce que*
• au moins les lames (4a) présentant une configuration de coupe en forme de V orienté vers l'intérieur, les lames inférieures (3), les lames latérales intérieures (2a) et extérieures (2) ainsi que les courts segments droits (43) des lames (4a) sont disposées par paires et décalées de 180° les unes par rapport aux autres, sur la plaque de coupe réversible (1),
• les lames latérales extérieures (2) de la plaque de coupe réversible (1) sont subdivisées chacune en un segment coupant (6) et un segment non coupant (7) par au moins une lame transversale (5) inclinée sur le plan de coupe considéré, les deux segments (6), (7) des lames latérales étant décalés l'un par rapport à l'autre,
• les lames latérales extérieures (2) de la plaque de coupe réversible (1) est de plus subdivisées chacune par une autre lame transversale (18) en une lame de dégrossissage (19) et une lame de finissage (20), celle dernière étant légèrement en saillie (26) sur la lame de dégrossissage (19).

2. Outil de perçage et de fraisage selon la revendication 1 *caractérisé en ce que* les moyens d'alignement et de centrage associés à la fixation de la plaque de coupe réversible (1) sur le support de plaque (13) comprennent des évidements (11) demi-sphériques ou en forme de calottes ménagés dans la plaque réversible (1) et des évidements (12) en forme de rainure, respectivement de calottes, ménagés dans le support de plaque (13), ainsi que des corps creux, en particulier des petites tubes (30) ou des billes creuses (32), à paroi mince, déformables élastiquement et s'engageant dans lesdits évidements.

3. Outil de perçage et de fraisage selon l'une des revendications 1 et 2 *caractérisé en ce que*
• la profondeur des évidements (11) demi-sphériques ou en forme de calottes ménagés dans la plaque réversible (1) correspond à une fraction, environ un tiers, du diamètre du corps creux, en particulier du diamètre du petit tube, respectivement de la bille creuse,
• la profondeur de la rainure (12) ou de l'évidement (11) en forme de calotte ménagé dans le support de plaque (13) est légèrement inférieure aux deux tiers du diamètre des corps creux à paroi mince, déformables élastiquement, à savoir des tubes (30) ou des billes (32), étant précisé qu'il est prévu des espaces libres (31) pour recevoir du matériau déplacé par la déformation des tubes (30) lors de la fixation de la plaque réversible (1) sur le corps (22) de l'outil.

4. Outil de perçage et de fraisage selon l'une des revendications 1 à 3 *caractérisé en ce que* les lames servant de lames de dégrossissage (19), (2a) sont disposées avec un angle (46), (47) sur l'axe (35) de l'outil et présentent une gorge creuse (33).

5. Outil de perçage et de fraisage selon l'une des revendications 1 à 4 *caractérisé en ce que* les lames frontales extérieures et intérieures (19), (2a) comme la lame frontale intérieure (4a) sont disposées avec des angles différents et que le nombre de lames en forme de V (4a) sur chaque côté de la plaque de coupe réversible est supérieur à deux.

6. Outil de perçage et de fraisage selon l'une des revendications 1 à 5 *caractérisé en ce que* sur la largeur de coupe du support de plaque (13) peuvent être disposées plusieurs plaques de coupe réversibles (1) avec des lames (4a) en forme de V et que même dans l'hypothèse où le plus grand nombre possible de lames (4a) est prévues, ces dernières ne s'étendent pas tout à fait jusqu'au centre (35) de l'outil de perçage-fraisage.

7. Outil de perçage et de fraisage selon l'une des revendications 1 à 6 *caractérisé en ce que* la zone de transition entre les lames frontales (4) et les lames latérales (2), (2a) est formée par un biseau (21), (21a).

8. Outil de perçage et de fraisage selon l'une des revendications 1 à 7 *caractérisé en ce que* la configuration des lames sur les plaques de coupe réversible (1) est en triangle.

9. Outil de perçage et de fraisage avec un corps (22) pour usiner dans du matériau plein des évidements circulaires, tels que des ajustements, des trous borgnes ou des alésages taraudés de diamètre quelconque compris à l'intérieur de limites déterminées, étant observé que
• l'outil de perçage-fraisage qui est disposé par exemple sur une machine-outil à commande CNC, est entraîné en rotation et est déplaçable axialement tout en tournant autour de l'axe de l'évidement sur une trajectoire circulaire,
• l'outil de perçage-fraisage comporte des plaques de coupe (1) avec des lames (4a) pour usiner un avant-trou, disposées en position alignée grâce à des moyens d'alignement et de centrage prévus sur la surface d'appui associée au corps (22) de l'outil et grâce à un moyen de fixation,
• les lames (4a) présentent une configuration de coupe ayant la forme d'un V orienté vers l'intérieur, formée par une lame inférieure (3),
• il est prévu des lames latérales intérieures (2a) et extérieures (2), les zones de transition entre les lames étant développées en forme de rayon,
*caractérisé en ce que*
• au moins les lames (4a) présentant une configuration de coupe en forme de V orienté vers l'intérieur, les lames inférieures (3), les lames latérales intérieures (2a) et extérieures (2) ainsi que les couds segments droits (43) des lames (4a) sont disposées par paires et décalées de 180° les unes par rapport aux autres, sur la plaque de coupe réversible (1),
• les lames latérales extérieures (2) de la plaque de coupe réversible (1) sont subdivisées chacune en un segment coupant (6) et un segment non coupant (7) par au moins une lame transversale (5) inclinée sur le plan de coupe considéré, les deux segments (6), (7) des lames latérales étant décalés l'un par rapport à l'autre,
• les lames latérales extérieures (2) de la plaque réversible (1) se prolongent par une dent à fileter (9), saillant sur lesdites lames latérales, de configuration correspondant à la forme de profilé du taraudage à usiner, une dent à fileter (8) de dimensions réduites par rapport à la forme de profilé du taraudage à usiner étant disposée devant la dent à fileter (9).

10. Procédé d'usinage dans du matériau plein d'évidements circulaires, tels que des ajustements, des trous borgnes ou des alésages taraudés de diamètre quelconque à l'intérieur de limites déterminées, grâce à un outil de perçage et de fraisage avec un corps d'outil, étant observé que
• l'outil de perçage-fraisage qui est disposé par exemple sur une machine-outil à commande CNC, est entraîné en rotation et est déplaçable axialement tout en tournant autour de l'axe sur une trajectoire circulaire, et, comporte des lames frontales pour usiner l'avant-trou, prévues sur des plaques de coupe,
• l'outil de perçage-fraisage est pourvu de lames (4a) qui forment avec au moins une lame inférieure (3) une configuration de coupe ayant la forme d'un V orienté vers l'intérieur, et, de lames latérales intérieures (2a) et extérieures (2) ainsi que de courts segments droits (43) des lames (4a),
• les lames latérales extérieures (2) sont subdivisées chacune par au moins une lame transversale (5) en un segment en contact de coupe (6) et un segment hors contact de coupe (7),
• les lames latérales extérieures (2) de chaque côté de la plaque de coupe (1) sont de plus subdivisées par une autre lame transversale (18) en une lame de dégrossissage (19) et une lame de finissage (20) de sorte que la lame de finissage est légèrement saillant d'un montant (26) sur la lame de dégrossissage (19), les configurations de coupe de la plaque réversible étant organisées par paires et décalées de 180° les unes par rapport aux autres,
*caractérisé en ce que*
• l'évidement envisagé dans le matériau plein est d'abord usiné dans sa profondeur complète avec une surépaisseur par l'outil de perçage-fraisage entraîné en rotation selon le procédé de perçage-fraisage circulaire et déplacé avec une surépaisseur jusqu'à la mesure en direction de l'axe Z, puis, en vue d'usiner une surface de fond plane, est effectué un mouvement de rotation sans avance en direction de l'axe Z ce qui permet de terminer le processus de dégrossissage,
• ensuite la surface de l'évidement est finie, respectivement usinée à sa dimension finie, en répétant dans l'ordre inverse le déroulement du programme d'usinage de l'évidement avec avance dans la surépaisseur subsistante.
